# EUROPÄISCHE PATENTSCHRIFT

(11) **EP 1 913 249 B1**
(45) Veröffentlichungstag und Bekanntmachung des Hinweises auf die Patenterteilung: **15.10.2008**
(21) Anmeldenummer: 06777852.2
(22) Anmeldetag: 20.07.2006
(51) Int. Cl.: F02D 41/40, F02M 59/46, F02M 63/00, F02D 41/38, F02M 47/02, F02M 51/06

(54) **VERFAHREN UND VORRICHTUNG ZUR STEUERUNG EINES EINSPRITZSYSTEMS EINER BRENNKRAFTMASCHINE**
METHOD AND DEVICE FOR CONTROLLING THE INJECTION SYSTEM OF AN INTERNAL COMBUSTION ENGINE
PROCEDE ET DISPOSITIF POUR COMMANDER UN SYSTEME D'INJECTION D'UN MOTEUR A COMBUSTION INTERNE

(30) Priorität: 02.08.2005 DE 102005036190
(43) Veröffentlichungstag der Anmeldung: 23.04.2008
(73) Patentinhaber: ROBERT BOSCH GMBH, 70442 Stuttgart (DE)
(72) Erfinder: STOECKLEIN, Wolfgang, 70176 Stuttgart (DE); RAPP, Holger, 71254 Ditzingen (DE); GANGI, Marco, 73734 Esslingen (DE); SCHULZ, Udo, 71665 Vaihingen/enz (DE)
(86) Internationale Anmeldenummer: PCT/EP2006/064440
(87) Internationale Veröffentlichungsnummer: WO 2007/014863

(56) Entgegenhaltungen:
- EP-A- 1 496 233
- WO-A-20/05093241
- DE-A1- 10 123 035
- DE-C1- 10 002 270
- DE-C1- 19 700 738
- US-A- 4 840 060

## Beschreibung

### Stand der Technik

Die Erfindung betrifft ein Verfahren und eine Vorrichtung zur Steuerung eines Einspritzsystems einer Brennkraftmaschine gemäß den Oberbegriffen der jeweiligen unabhängigen Ansprüche.

In modernen Hochdruck-Kraftstoffeinspritzsystemen insbesondere selbstzündender Brennkraftmaschinen, wird die Kraftstoffeinspritzung durch piezoelektrische Aktoren gesteuert, die üblicherweise zunächst ein Servoventil ansteuern. Der Schaltzustand dieses Ventils beeinflußt dann wiederum den Druck in einem Steuerraum, der entweder das Öffnen oder das Schließen des Einspritzventils bewirkt. In Zukunft werden aber verstärkt Injektoren zum Einsatz kommen, bei denen die Aktoren unter Verzicht auf das Servoventil unmittelbar oder übersetzt auf Düsennadeln von Injektoren zur Kraftstoffeinspritzung wirken.

Ein sehr verbreitetes, in der DE 100 02 270 C1 beschriebenes Einspritzsystem der hier betroffenen Art ist das sogenannte "Common-Rail-(CR)-Einspritzsystem", bei dem Kraftstoff in einem Hochdruckspeicher (Rail) zwischengespeichert wird, bevor dieser den einzelnen Injektoren zugeführt wird.

Hierbei erfolgt die Einspritzung des Kraftstoffs häufig durch eine Anzahl von Teileinspritzungen, die eine verbesserte Gemischaufbereitung ermöglichen und damit insbesondere geringere Abgasemissionen der Brennkraftmaschine, eine geringere Geräuschentwicklung bei der Verbrennung sowie eine erhöhte Leistungsabgabe der Brennkrafhnaschine bewirken. Dabei ist es insbesondere wünschenswert, den zeitlichen Abstand zwischen jeweils zwei Teileinspritzungen ohne Einschränkung variieren zu können.

Bei den Kraftstoffeinspritzungen und insbesondere bei den genannten mehrfachen Teileinspritzungen kommt der Präzision der jeweiligen Einspritzmenge große Bedeutung zu. Es ist nun jedoch gleichzeitig bekannt, daß jede Einspritzung mittels eines Injektors derartiger CR-Einspritzsysteme einen kurzzeitigen Einbruch des Kraftstoffdruckes in einer in dem Einspritzsystem angeordneten Zuleitung von dem Rail zu dem betreffenden Injektor, sowie in einem solchen Injektor selbst von einem an das Rail angrenzenden Hochdruckanschluß zu einer Düsennadel des Injektors bewirkt. Zudem führt das Schließen der Düsennadel zu einem Druckanstieg. Die Kombination von Druckeinbruch und Druckanstieg führt dann zu einer bevorzugt zwischen dem Rail und dem Injektor auftretenden Kraftstoff Druckwelle. Diese Druckwelle führt insbesondere zu unerwünschten Schwankungen der jeweils eingespritzten Kraftstoffmenge, wobei sich dieser Druckwelleneffekt sogar noch bei steigender Nadelgeschwindigkeit der Düsennadel des Injektors verstärkt, so daß seiner Beachtung, insbesondere auch in zukünftigen Einspritzsystemen, bei denen hochschnelle Piezo-Steller als Einspritzaktoren zur Düsennadelsteuerung in dem jeweiligen Injektor zum Einsatz kommen, eine zunehmende Bedeutung zukommt.

Der genannte Druckwelleneinfluss nimmt mit zunehmendem zeitlichem Abstand zwischen den jeweils benachbarten Einspritzungen ab. Demzufolge nimmt auch der Einfluß auf die Einspritzmenge einer jeweils nachfolgenden Einspritzung mit zunehmendem zeitlichem Abstand ab und nähert sich für genügend große zeitliche Abstände der ungestörten Menge an, die man mit einer zeitlich isolierten Einspritzung erhalten würde.

Da die beschriebenen Druckwelleneffekte streng systematischer Natur sind, und zwar im wesentlichen von dem zeitlichen Abstand der beteiligten Einspritzungen, der eingespritzten Kraftstoffmenge, dem hydraulischen Kraftstoffdruck sowie der Kraftstofftemperatur im hydraulisch relevanten Leitungssystem abhängen, können sie durch eine geeignete Ansteuerfunktion im Motorsteuergerät korrigiert werden. Ein beispielsweise aus der deutschen Offenlegungsschrift DE 101 23 035 A1 bekannter Ansatz zur Minimierung des genannten Druckwelleneinflusses besteht deshalb darin, diesen Einfluß auf die Einspritzmengen der jeweiligen Injektoren auszumessen und die Ergebnisse dieser Vermessung beispielsweise bei der Voreinstellung der Ansteuerdaten des Einspritzsystems zu berücksichtigen. Eine entsprechende Korrektur der genannten Ansteuerdaten basiert dabei auf einer Reihe von vorab empirisch oder experimentell ermittelten Kraftstoff-Mengenwellen als Funktion des zeitlichen Abstandes zwischen jeweils zwei oder gegebenenfalls sogar mehreren Teileinspritzungen. Die genannte Druckwellenkompensation legt dabei den an einem Referenzsystem gemessenen Mengeneinfluß auf eine nachfolgende Einspritzung in Kennfeldern ab und kompensiert den Einfluß dann zur Laufzeit der Brennkraftmaschine durch entsprechende Veränderung der Bestromungsdauer der jeweils nachfolgenden Einspritzung - also der Ansteuerdauer der nachfolgenden Einspritzung. Die vorbeschriebene, im Stand der Technik übliche Vorgehensweise besteht demnach grundsätzlich in der Ermittlung der genannten Mengenwellen. Die damit ermittelten Mehr- oder Mindermengen werden in den genannten Kennfeldern abgelegt und zur Laufzeit eines CR-Steuerprogramms durch entsprechendes In-Abzug-Bringen in einem Mengenpfad der Motorsteuerung kompensiert.

Dieser Algorithmus funktioniert allerdings nur bei vollständig linearen Mengenumrechnungs- oder Ansteuerdauerkennfeldern mit der notwendigen Präzision. Treten dagegen in den genannten Kennfeldern Nichtlinearitäten (beispielsweise Steigungsänderung oder dgl.) auf, so verursacht der verwendete Algorithmus systematische Fehler bei der Druckwellenkompensation.

Um auch diese Nachteile zu beseitigen, schlägt die nicht vorveröffentlichte Anmeldung der Anmelderin mit dem Anmelderaktenzeichen DE 10 2004 014 367 vor, die genannte Druckwellenkompensation anstelle der genannten Mengenwellen auf der Basis von Ansteuerdauer-Wellen durchzuführen. Es wird mit anderen Worten die Ansteuerdauer in Kenntnis einer jeweiligen Ansteuerdauer-Welle so verändert, daß eine Wunscheinspritzmenge erreicht wird.

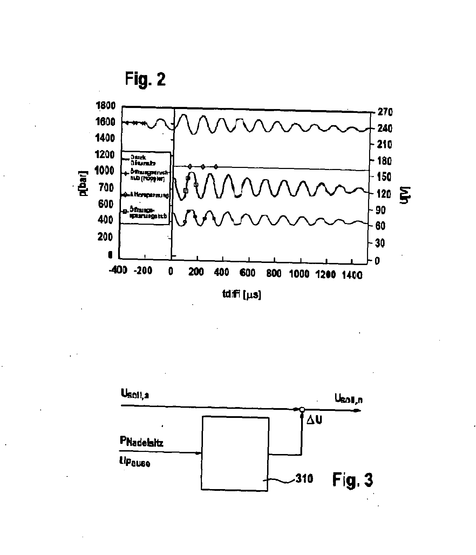

Das Verfahren kommt insbesondere bei Injektoren zum Einsatz, bei denen die auf die Düsennadel wirkende Schließkraft über ein Servoventil übertragen wird. Bei solchen Injektoren kann die Düsennadel nur über den Schaltzustand des Servoventils beeinflußt werden, also quasi in digitaler Form lediglich geöffnet oder geschlossen werden. Eine Variation der auf die Düsennadel wirkenden Kraft ist dagegen nicht möglich. Bei Injektoren mit direkter Nadelsteuerung (CRI-PDN) wirkt der piezoelektrische Aktor unmittelbar oder übersetzt durch einen mechanischen oder hydraulischen Koppler auf die Düsennadel. Bei diesen Aktoren sind der Aktor und der Koppler von einem größeren, unter Raildruck stehenden Kraftstoffvolumen umgeben. Infolge dieses nennenswerten Volumens in diesem Bereich sind die Druckschwingungen, die sich als Folge der Einspritzung zwischen diesem Aktorraum und dem Rail ausbilden, von geringer Amplitude. Allerdings löst jede Einspritzung eine Druckschwingung am Düsensitz aus. Diese Schwingung weist zwar eine geringere Amplitude auf, als dies bei herkömmlichen, mittels eines Servoventils betätigten Injektoren der Fall ist, dafür ist aber die Schwingungsfrequenz vergleichsweise hoch. Dies hat zur Folge, daß im Anschluß an eine Einspritzung, z.B. an eine Voreinspritzung, auch die Druckdifferenz zwischen dem Druck am Nadelsitz, der die Düsennadelöffnungskraft bestimmt, und dem Druck im Koppler, beispielsweise in einem hydraulischen Koppler, der die Düsennadelschließkraft bestimmt, einer hochfrequenten Schwingung unterliegt. In Fig. 2 ist der Druck am Nadelsitz für die zur Düsenöffnung erforderliche Druckabsenkung im Koppler sowie die Ansteuerspannung und die zur Düsenöffnung erforderliche Spannungsabsenkung im Anschluß an eine Voreinspritzung eines solchen Aktors schematisch dargestellt. Bisher ist es, wie aus Fig. 2 ersichtlich, üblich, den Aktor in den Ansteuerpausen stets auf eine - gegebenenfalls raildruckabhängige - Spannung aufzuladen. Während der Ansteuerdauer wird die Spannung des piezoelektrischen Aktors demgegenüber abgesenkt. Hierdurch sinkt die Düsennadelschließkraft und sobald diese die Düsennadelöffnungskraft unterschreitet, beginnt die Düsennadel zu öffnen. Die vorbeschriebene Druckschwingung wirkt sich insbesondere bei dicht aufeinanderfolgenden Einspritzungen in erheblichem Maße auf die Einspritzmenge aus. Die bei konstanten Ansteuerdauern von zwei aufeinanderfolgenden Einspritzungen eingespritzte Menge Q der zweiten Einspritzung in Abhängigkeit vom zeitlichen Abstand t_{diff} der Einspritzungen schwankt hierdurch erheblich. Dabei treten infolge der hohen Frequenz der Druckschwingungen auch hohe Gradienten der eingespritzten Menge dQ/dt_{diff} auf, wodurch die Genauigkeit der Druckwellenkompensation im Steuergerät erheblich beeinträchtigt wird.

Darüber hinaus wird die mechanische Schließkraft, mit der die Düsennadel in ihren Sitz gedrückt wird, im Anschluß an eine Einspritzung Oszillationen unterworfen, die zu einem erhöhten Verschleiß des Düsensitzes beim Betrieb des Injektors führen.

Der Einfluß der Druckwellen in den Zuleitungen vom Rail zum jeweiligen Injektor kann rein prinzipiell dadurch reduziert werden, daß in der Zuleitung vom Rail zum Injektor eine Drossel verbaut wird. Dadurch werden gleichzeitig die möglichen für den Hochdruckkreis schädlichen Druckspitzen, die sich bis zum Injektor fortsetzen, vermieden. Eine Druckwellenkorrektur kann hierbei auf der Basis des in der Zuleitung auftretenden Raildrucks erfolgen. Dazu wären jedoch für jeden Zylinder Drucksensoren in der jeweiligen Zuleitung erforderlich. Man benötigt also die gleiche Anzahl von Drucksensoren wie Zylinder existieren. Eine solche Mehrzahl von Drucksensoren erzeugt hohe Kosten und einen erheblichen Bauaufwand.

Aus EP 1 496 233 A ist ein Verfahren bekannt, bei dem die Austeuerdauer für ein Kraftstoffmengenbestimmendes Stellglied abhängig von der Druckwellen in einem Steuerraum korrigiert wird.

### Vorteile der Erfindung

Der Erfindung liegt daher die Aufgabe zugrunde, ein Verfahren und eine Vorrichtung der eingangs genannten Art dahingehend weiterzubilden, daß eine verbesserte Druckwellenkompensation mit möglichst geringem Bauaufwand und geringen Kosten ermöglicht wird. Insbesondere soll auf Drucksensoren zur Erfassung des Raildrucks verzichtet werden.

Die Aufgabe wird gelöst durch die Merkmale der unabhängigen Ansprüche. Vorteilhafte Ausgestaltungen und Weiterbildungen sind Gegenstand der jeweiligen Unteransprüche.

Der Erfindung liegt der Gedanke zugrunde, Injektoren mit direkter Nadelsteuerung selbst als Sensorelemente zur Erfassung der an der Nadel des Injektors anliegenden Druckwelle zu verwenden. Hierzu wird der sensorische Effekt des Piezoaktors verwendet. Da derartige Injektoren mit direkter Nadelsteuerung (CRI-PDN) in den Einspritzpausen bzw. in den Zeitintervallen zwischen den Ansteuerdauern geladen sind, kann jede Längenänderung infolge der sich ändernden Kraftwirkung eines sich ändernden Kraftstoffdruckes im Injektor, d.h. des Einspritzdrucks durch Messung der Änderung der Aktorspannung bestimmt werden.

Bevorzugt wird die Messung der Aktorspannung nach dem Einspritzende gestartet und mit einem darauffolgenden Einspritzbeginn beendet. Neben der Aktorspannung werden der Raildruck und die Kraftstofftemperatur gemessen sowie der zeitliche Abstand zweier Einspritzungen und die Ansteuerdauer erfasst. Die Druckwellen selbst werden durch Messung der Amplituden, insbesondere der Spitze-Spitze-Werte der Druckwelle, und/oder der Nulldurchgänge der Aktorspannung bestimmt.

Bevorzugt werden die auf diese Weise durch Messung bestimmt Ansteuerspannung als Funktion des in einem dynamischen Interrupt ermittelten Raildrucks, der Kraflstofflemperatur, des zeitlichen Abstands zweier Einspritzungen sowie der Ansteuerdauer in einem Kennfeldraum oder einer Matrix in einer Steuereinrichtung der Brennkraftmaschine gespeichert und die Ansteuerspannung einer darauffolgenden Einspritzung entsprechend der so ermittelten Druckwellen moduliert und der Wert für die Ansteuerdauer der nächsten Einspritzung entsprechend korrigiert.

Der Vorteil dieses Verfahrens liegt in einer sehr genauen Druckwellenkorrektur, welche die Exemplarstreuungen, die Alterungseffekte, Drifteffekte des Hochdruckkreises bis zum einspritzrelevanten Kraftstoffdruck und Kraflstoffeinflüsse berücksichtigt, ohne daß zusätzliche Drucksensoren in jeder Hochdruckleitung zum Injektor benötigt werden.

Die Erfindung betrifft ferner eine Vorrichtung zur Steuerung eines hier betroffenen Einspritzsystems in der vorgenannten Weise, welche in der bevorzugten Ausbildung eine Schaltungseinheit zur Ermittlung der an der Düsennadel während einer Einspritzpause anliegenden Aktorspannung und zur Modulierung der Ansteuerspannung einer folgenden Einspritzung entsprechend der erfaßten Aktorspannung aufweist.

### Zeichnung

Die Erfindung wird nachfolgend anhand bevorzugter Ausführungsbeispiele und unter Bezugnahme auf die Zeichnungen noch eingehender erläutert, aus denen weiteren Besonderheiten, Merkmale und Vorteile der Erfindung hervorgehen.

Im einzelnen zeigen:

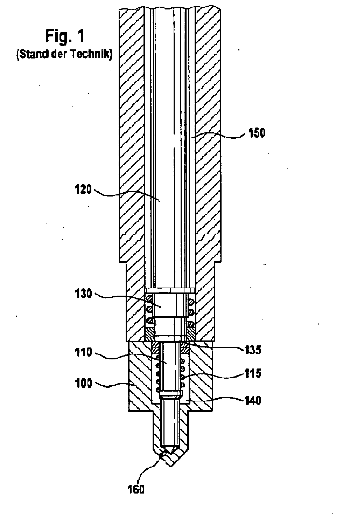

- Fig. 1: eine schematische Darstellung eines zum Einsatz der vorliegenden Erfindung geeigneten im Stand der Technik bekannten Injektors mit direkter Nadelsteuerung;
- Fig. 2: den Druck am Nadelsitz, die zur Düsenöffnung erforderliche Druckabsenkung im Koppler, die Ansteuerspannung und die zur Düsenöffnung erforderliche Spannungsabsenkung im Anschluß an eine Einspritzung gemäß einem aus dem Stand der Technik bekannten Verfahren zur Ansteuerung eines piezoelektrischen Aktors eines Injektors mit direkter Düsennadelsteuerung und
- Fig. 3: schematisch ein Blockschaltbild einer Vorrichtung zur Ansteuerung eines piezoelektrischen Aktors mittels korrigierter Ansteuerspannungen.

### Beschreibung von Ausführungsbeispielen

Die für das Verständnis der Erfindung erforderlichen Bauteile eines Injektors mit direkter Düsennadelsteuerung, wie er beispielsweise aus der nicht vorveröffentlichten Anmeldung der Anmelderin mit dem Aktenzeichen DE 10 2004 014 367 hervorgeht, auf die vorliegend diesbezüglich Bezug genommen wird, weist einen Düsenkörper 100 auf, in dem eine Düsennadel 110 entgegen der Rückstellkraft einer Feder 115 in Axialrichtung des Düsenkörpers 100 beweglich geführt ist.

Die Düsennadel 110 wird von einem piezoelektrischen Aktor 120 über einen hydraulischen Koppler direkt - das heißt ohne Zwischenschaltung eines Steuerventils, wie dies bei aus dem Stand der Technik bekannten Injektoren der Fall ist - betätigt. Der hydraulische Koppler weist einen aktorseitigen Übersetzerkolben 130 auf, der über einen Spalt 135 auf die Düsennadel 110 wirkt.

Die Düsennadel 110 ist von einem düsenseitigen Hochdruckraum 140 umgeben. Der Aktor 120 und der hydraulische Koppler 130 sind von einem aktorseitigen Hochdruckraum 150 umgeben, der mit unter Raildruck stehendem Kraftstoff gefüllt ist. Infolge des nennenswerten Volumens in diesem Bereich sind die Druckschwingungen, die sich infolge der Einspritzungen zwischen dem aktorseitigen Hochdruckraum 150 und dem Hochdruckspeicher (Rail) ausbilden, von geringer Amplitude. Jede Einspritzung löst eine Druckschwingung an einem Sitz 160 der Düsennadel 110 aus. Aufgrund dieser Schwingungen wird nicht nur die eingespritzte Kraftstoffmenge verfälscht, sie führt auch zu einem Verschleiß der Düsennadel 110 und des Düsensitzes 160, dadurch, daß die Düsennadel 110 in den Einspritzpausen mit einer pulsierenden Kraft beaufschlagt wird, die auf den Düsensitz 160 einwirkt, wodurch die Düsennadel 110 auf dem Düsensitz 160 gewissermaßen "vibriert".

Diese Druckschwingungen werden dabei durch eine hochfrequente kontinuierliche Messung während der Einspritzpausen des Aktors 120 dadurch gemessen, daß die an dem Aktor 120 anliegende Ansteuerspannung U_{Pause} gemessen wird. Die Messung erfolgt mit dem Einspritzende und endet mit dem Beginn einer darauffolgenden Einspritzung. Mit der Messung der Ansteuerspannung während der Einspritzpause U_{Pause} werden gleichzeitig einmalig auch die Meßgrößen Raildruck, Kraftstofftemperatur gemessen. Die Bestimmung der Einspritzzeiten bei derartigen Common-Rail-Systemen wird typischerweise in sogenannten statischen und dynamischen Interrupts vorgenommen. In einem statischen Interrupt des jeweiligen Zylinders wird der Ansteuerbeginn der nächsten Einspritzung(en) berechnet. In einem dynamischen Interrupt wird, unter Berücksichtigung der Rechen- und Hardware-Laufzeiten des Controllers des Steuergeräts, so nahe wie möglich vor dem Ansteuerbeginn die Ansteuerdauer der jeweiligen Einspritzung(en) berechnet. Die der Berechnung der Ansteuerdauer zugrundeliegenden Größen sind der Raildruck, die gewünschte Sollmenge und der Ausgangswert der Druckwellenkorrekturfunktion. Die Druckschwingung wird mit einer minimalen Anzahl von Daten beschrieben. Sie wird durch Suche der Spitze-Spitze-Werte und/oder durch Suche der Nulldurchgänge ermittelt.

Im dynamischen Interrupt werden der Raildruck, die Kraflstofftemperatur, der Einspritzabstand zur vorhergehenden Einspritzung sowie die Ansteuerdauer der vorgehenden Einspritzung gemessen/bestimmt und als Eingangsgrößen z.B. eines Kennfeldraumes oder einer Matrix, deren Dimension der Anzahl der Eingangsgrößen entspricht, abgelegt. Der Wert aus dem Kennfeldraum bzw. der Matrix stellt die multiplikative Korrektur zum im dynamischen Interrupt gemessenen Kraftstoff-Druck im Rail, der beispielsweise durch einen Raildrucksensor gemessen wird, oder zum gemessenen Kraftstoff-Druck im Aktor, der durch Messung der Ansteuerspannung während der Einspritzpause U_{Pause} ermittelt wird, dar. Der ermittelte Wert des zu erwartenden Kraftstoff-Drucks in einer darauffolgenden Einspritzung wird durch gewissermaßen Extrapolation der gespeicherten Werte vorhergehender Einspritzungen bestimmt. Hierzu werden anhand der Meßgrößen Raildruck, Kraftstofftemperatur, Einspritzabstand zur vorhergehenden Einspritzung, Ansteuerdauer der vorhergehenden Einspritzung aus den gelernten Druckschwingungen deren aktuell relevante Kenngrößen ermittelt, wie z.B. die Wellenlänge, die Phasenlage und der Spitze-Spitze-Wert der Druckwelle. Der zum Zeitpunkt des dynamischen Interrupts gemessene Kraftstoff-Druck im Rail oder der gemessene Kraftstoff-Druck im Aktor beschreibt die Lage der Druckwelle. Da der nächste Einspritzbeginn feststeht, kann über den Abstand des dynamischen Interrupts zum Einspritzbeginn und die genaue Kenntnis der Druckwelle, d.h. ihrer Wellenlänge, ihrer Phasenlage und ihres Spitze-Spitze-Werts, der Kraftstoff-Druck zum kommenden Einspritzzeitpunkt bestimmt werden und auf diese Weise die zum Erreichen der gewünschten Einspritzmenge erforderliche Ansteuerdauer berechnet werden. Dies geschieht mittels der in Fig. 3 dargestellten Schaltungseinheit 310, der als Eingangsgröße die Spannung U_{Pause}, die dem Druck am Nadelsitz P_{Nadelsitz} entspricht. Aus dieser Größe wird eine Abweichung von einem Vorgabewert der Ansteuerspannung U_{soll, a} berechnet und diesem Wert additiv aufgeschaltet, so daß sich eine neue Ansteuerspannung U_{soll, n} ergibt mit der der piezoelektrische Aktor 120 schließlich beaufschlagt wird.

Die Modulation der Ansteuerspannung erfolgt demnach auf der Basis von zuvor ermittelten und im Steuergerät abgelegten Druckschwingungen, die gegebenenfalls noch rechnerisch in Echtzeit an gegenüber der ursprünglichen Berechnung veränderte Parameter angepaßt werden.

Es ist eine Übertragung der vorliegenden Erfindung auf ladungsgesteuerle Systeme denkbar. Dabei werden alle Spannungs-, Soll- und Istwerte durch Ladungs-, Soll- und Istwerte ersetzt.

## Patentansprüche

1. Verfahren zur Steuerung eines Einspritzsystems einer Brennkraftmaschine, wobei eine Kraftstoffeinspritzung mittels wenigstens eines piezoelektrischen Aktors (120), der unmittelbar oder übersetzt auf eine Düsennadel (115) eines Injektors wirkt, erfolgt und wobei eine die Aktorbetätigung bestimmende Ansteuerspannung in Abhängigkeit von einer Druckwellenbeeinflussung der Kraftstoffeinspritzung korrigiert wird, **dadurch gekennzeichnet, daß** die an der Düsennadel (115) anliegenden, durch eine Einspritzung hervorgerufenen Druckwellen durch Messung der Aktorspannung während einer Einspritzpause ermittelt wird und die Aktorspannung einer folgenden Einspritzung entsprechend den Druckwellen an der Düsennadel moduliert wird.

2. Verfahren nach Anspruch 1, **dadurch gekennzeichnet, daß** die Messung der Aktorspannung nach dem Einspritzende gestartet und mit einem darauffolgenden Einspritzbeginn beendet wird.

3. Verfahren nach Anspruch 1 oder 2, **dadurch gekennzeichnet, daß** neben der Aktorspannung der Raildruck und/oder die Kraftstofftemperatur gemessen werden sowie der zeitliche Abstand zweier Einspritzungen und/oder die Ansteuerdauer berücksichtigt werden.

4. Verfahren nach einem der Ansprüche 1 bis 3, **dadurch gekennzeichnet, daß** die Druckwellung durch Messung der Amplituden und/oder der Nulldurchgänge der Aktorspannung bestimmt werden.

5. Verfahren nach einem der vorstehenden Ansprüche, **dadurch gekennzeichnet, daß** die durch Messung der Ansteuerspannung ermittelten Druckwellen als Funktion des in einem dynamischen Interrupt ermittelten Raildrucks, der Kraftstofftemperatur, des zeitlichen Abstands zweier Einspritzungen sowie der Ansteuerdauer in einem Kennfeldraum oder einer Matrix in einer Steuereinrichtung (310) der Brennkraftmaschine gespeichert werden und die Ansteuerspannung einer folgenden Einspritzung entsprechend der so ermittelten Druckwellen moduliert wird.

6. Verfahren nach Anspruch 5, **dadurch gekennzeichnet, daß** die Ansteuerspannung rechnerisch in Echtzeit an gegenüber einer vorausgehenden Berechnung veränderte Parameter angepaßt wird.

7. Vorrichtung zur Steuerung eines Einspritzsystems einer Brennkraftmaschine, wobei eine Kraftstoffeinspritzung mittels wenigstens eines piezoelektrischen Aktors (120), der unmittelbar oder übersetzt auf eine Düsennadel (115) eines Injektors wirkt, erfolgt und wobei eine die einzuspritzende Kraftstoffmenge bestimmende Ansteuerung in Abhängigkeit von einer Druckwellenbeeinflussung der Kraftstoffeinspritzung korrigiert wird, **gekennzeichnet durch** eine Schaltungseinheit (310) zur Ermittlung des während einer Einspritzpause auftretenden Aktorspannungsverlaufs und zur Modulierung der Ansteuerspannung einer folgenden Einspritzung entsprechend der erfaßten Aktorspannung, wobei die an der Düsennadel (115) anliegenden, **durch** eine Einspritzung hervorgerufenen Druckwellen **durch** Messung der Aktorspannung während einer Einspritzpause ermittelt wird.

8. Vorrichtung nach Anspruch 7, **dadurch gekennzeichnet, daß** sie ein Steuergerät der Brennkraftmaschine umfasst und **daß** die Schaltungseinheit (310) Teil dieses Steuergerätes der Brennkraftmaschine ist.

9. Vorrichtung nach Anspruch 7 oder 8, **dadurch gekennzeichnet, daß** die korrigierte Ansteuerspannung durch die Schaltungseinheit (310) in Echtzeit an gegenüber vorausgehenden Berechnungen veränderte Parameter anpassbar ist.

10. Einspritzsystem mit einem Injektor mit wenigstens eines piezoelektrischen Aktors, und mit einer Vorrichtung nach einem der Ansprüche 7 bis 9, **dadurch gekennzeichnet, daß** der wenigstens eine piezoelektrische Aktor (120) mechanisch oder hydraulisch übersetzt auf die Düsennadel des Injektors wirkt.

## Claims

1. Method for controlling an injection system of an internal combustion engine, with an injection of fuel taking place by means of at least one piezoelectric actuator (120) which acts directly, or with boosting, on a nozzle needle (115) of an injector, and with an activation voltage which determines the actuator actuation being corrected as a function of an influence of pressure waves on the fuel injection, **characterized in that** the pressure waves which act on the nozzle needle (115) and which are caused by an injection are determined by measuring the actuator voltage during an injection interval, and the actuator voltage of a subsequent injection is modulated corresponding to the pressure waves at the nozzle needle.

2. Method according to Claim 1, **characterized in that** the measurement of the actuator voltage is started after the end of injection and is ended at a subsequent start of injection.

3. Method according to Claim 1 or 2, **characterized in that,** in addition to the actuator voltage, the rail pressure and/or the fuel temperature are measured, and the time interval between two injections and/or the activation duration are taken into consideration.

4. Method according to one of Claims 1 to 3, **characterized in that** the pressure wave formation is determined by measuring the amplitudes and/or the zero crossings of the actuator voltage.

5. Method according to one of the preceding claims, **characterized in that** the pressure waves determined by measuring the activation voltage are stored, as a function of the rail pressure which is determined in a dynamic interrupt, of the fuel temperature, of the time interval between two injections and of the activation duration, in a three-dimensional characteristic map or in a matrix in a control device (310) of the internal combustion engine, and the activation voltage of a subsequent injection is modulated corresponding to the pressure waves determined in this way.

6. Method according to Claim 5, **characterized in that** the activation voltage is adapted by calculation in real time to parameters which have changed in relation to a preceding calculation.

7. Device for controlling an injection system of an internal combustion engine, with a fuel injection taking place by means of at least one piezoelectric actuator (120) which acts directly, or with boosting, on a nozzle needle (115) of an injector, and with an activation which determines the fuel quantity to be injected being corrected as a function of an influence of pressure waves on the fuel injection, **characterized by** a circuit unit (310) for determining the actuator voltage profile which occurs during an injection interval and for modulating the activation voltage of a subsequent injection corresponding to the measured actuator voltage, with the pressure waves which act on the nozzle needle (115) and which are caused by an injection being determined by measuring the actuator voltage during an injection interval.

8. Device according to Claim 7, **characterized in that** said device comprises a control unit of the internal combustion engine and the circuit unit (310) is a part of said control unit of the internal combustion engine.

9. Device according to Claim 7 or 8, **characterized in that** the corrected activation voltage can be adapted in real time by the circuit unit (310) to parameters which have changed in relation to preceding calculations.

10. Injection system having an injector with at least one piezoelectric actuator, and having a device according to one of Claims 7 to 9, **characterized in that** the at least one piezoelectric actuator (120) acts with mechanical or hydraulic boosting on the nozzle needle of the injector.

## Revendications

1. Procédé de commande du système d'injection d'un moteur à combustion interne selon lequel l'injection de carburant se fait à l'aide d'au moins un actionneur piézoélectrique (120) agissant directement ou de façon démultipliée sur l'aiguille (115) d'un injecteur et selon lequel la tension de commande qui définit l'actionnement de l'actionneur est corrigée en fonction de l'influence de l'onde de pression de l'injection de carburant,
**caractérisé en ce qu'**
on détermine les ondes de pression appliquées à l'aiguille d'injecteur (115), produites par une injection, en mesurant la tension appliquée à l'actionneur au cours d'une pause d'injection, et
on module la tension d'actionneur pour une injection suivante en fonction des ondes de pression appliquées à l'aiguille d'injecteur.

2. Procédé selon la revendication 1,
**caractérisé en ce qu'**
on débute la mesure de la tension de l'actionneur après la fin de l'injection et on la termine par le début de l'injection suivante.

3. Procédé selon la revendication 1 ou 2,
**caractérisé en ce qu'**
en plus de la tension de l'actionneur, on mesure la pression de la rampe et/ou la température du carburant et on tient compte de l'intervalle de temps entre deux injections et/ ou la durée de la commande.

4. Procédé selon l'une des revendications 1 à 3,
**caractérisé en ce qu'**
on détermine l'onde de pression par la mesure des amplitudes et/ou les passages par zéro de la tension de l'actionneur.

5. Procédé selon l'une des revendications 1 à 3,
**caractérisé en ce que**
l'on enregistre les ondes de pression obtenues par la mesure de la tension de commande en fonction d'une pression de rampe commune déterminée par une interruption dynamique, la température du carburant, l'intervalle de temps entre deux injections ainsi que la durée de commande, dans un espace de caractéristiques ou dans une matrice d'une installation de commande (310) du moteur à combustion interne et on module la tension de commande pour une injection suivante en fonction des ondes de pression ainsi déterminées.

6. Procédé selon la revendication 5,
**caractérisé en ce qu'**
on adapte la tension de commande par le calcul en temps réel à un paramètre modifié par un calcul antérieur.

7. Dispositif de commande d'un système d'injection d'un moteur à combustion interne selon lequel l'injection de carburant se fait par l'intermédiaire d'au moins un actionneur piézoélectrique (120) qui agit directement ou de façon démultipliée sur une aiguille d'injecteur (115) d'un injecteur, et
on corrige la commande déterminant la dose de carburant à injecter en fonction de l'influence d'une onde de pression de l'injection de carburant,
**caractérisé par**
une unité de circuit (310) pour déterminer l'évolution de la tension produite au niveau de l'actionneur au cours d'une pause d'injection et pour moduler la tension de commande d'une injection suivante en fonction de la tension d'actionneur, saisie,
et on détermine les ondes de pression appliquées à l'aiguille d'injecteur (115) et engendrées par une injection antérieure, par la mesure de la tension de l'actionneur au cours d'une pause d'injection.

8. Dispositif selon la revendication 7,
**caractérisé en ce qu'**
il comporte un appareil de commande du moteur à combustion interne et
l'unité de circuit (310) fait partie de cet appareil de commande du moteur à combustion interne.

9. Dispositif selon la revendication 7 ou la revendication 8,
**caractérisé en ce que**
l'on adapte la tension de commande corrigée par l'unité de circuit (310) en temps réel en fonction des paramètres modifiés par rapport à des calculs antérieurs.

10. Système d'injection comportant un injecteur ayant au moins un actionneur piézoélectrique et un dispositif selon l'une des revendications 7 à 9,
**caractérisé en ce qu'**
au moins un actionneur piézoélectrique (120) agit de manière démultipliée mécaniquement ou hydrauliquement sur l'aiguille d'injecteur.
